# EUROPEAN PATENT SPECIFICATION

(11) **EP 1 752 212 B1**
(45) Date of publication and mention of the grant of the patent: **14.01.2009**
(21) Application number: 05017338.4
(22) Date of filing: 10.08.2005
(51) Int. Cl.: B01J 19/00, B08B 3/08

(54) **Method for cleaning a reactor**
Verfahren zur Reinigung eines Reaktors
Procédé de nettoyage d' un réacteur

(43) Date of publication of application: 14.02.2007
(73) Proprietor: Linde AG, 80807 München (DE); Saudi Basic Industries Corporation, Riyadh 11422 (SA)
(72) Inventor: Fritz, Peter, Dr., 82008 Unterhaching (DE); Bölt, Heinz, 82515 Wolfratshausen (DE); Mosa, Fuad, 11422 Riyadh (SA); Ali, Talal, Dr., 11422 Riyadh (SA); Al Dugaither, Abdullah, 11422 Riyadh (SA)
(74) Representative: Winkler, Andreas Fritz Ernst

(56) References cited:
- GB-A- 1 131 595
- US-A- 3 139 415
- US-A- 3 475 218
- US-A- 3 507 849
- US-A- 3 887 529
- US-A- 3 997 360

## Description

The present invention relates to a method for cleaning an oligomerisation reactor having a tendency of fouling by deposition of solids.

Reactor fouling is especially a problem related to polymer technologies, i.e. oligomerisation and polymerisation reactions, for example the polymerisation of polypropylene, polyethylene, polystyrene and the like.

As a consequence of "fouling", the reactor has to be cleaned periodically, and, preferably, a spare reactor is required.

For cleaning of the reactor having solids (e.g. high molecular weight oligomers/polymers) deposited, the reactor has to be opened, and plant personnel has usually to enter the reactor for cleaning thereof mechanically. After cleaning, the reactor has usually to be inertised to be ready for a further oligomerisation or polymerisation reaction.

US 3, 139, 415 and US 3, 507, 849 describe methods for cleaning polymerisation reactors wherein a hot solvent is used to dissolve deposited solids.

A typical reactor downtime for cleaning is about 1 week. Thus, a cleaning operation adds to the costs of the product to be produced.

Therefore, it is an object of the present invention to provide a method for cleaning an oligomerisation reactor having a tendency of fouling by deposition of solids, which method overcomes the disadvantages of the prior art. Especially a method shall be provided which does not require mechanical cleaning, reduces the reactor down time, does not require purging/inertizing before/after cleaning and improves plant safety.

This object is achieved in that a hot solvent, in which the solids are soluble, and which has a temperature of at least 75°C, is applied to the reactor, the solids being substantially dissolved and the dissolved solids being discharged form the reactor, wherein the method is carried out without opening the reactor to atmosphere and wherein the solvent is heated within the reactor by means of runaway of a reaction carried out therein.

Surprisingly, it was found that using the inventive method for cleaning an oligomerisation reactor, no mechanical cleaning is necessary and the reactor downtime for cleaning is significantly reduced. Further, no purging/inertizing of the reactor before/after cleaning is necessary any longer as the reactor has not to be opened. Also, an automatic cleaning procedure may be provided by a sequence control, and the need of a spare reactor is eliminated. Finally, the plant safety is improved, since no plant personnel has to enter the reactor for cleaning and the risk of hydrocarbon exposure to atmosphere is eliminated.

The term "reactor", as used herein, is related to the reaction vessel as such.

The reactor is an oligomerisation reactor.

Most preferably, the reactor is an oligomerisation reactor for the oligomerisation of ethylene to obtain linear alpha-olefins.

Preferably, the solvent is an organic solvent, more preferably a hydrocarbon solvent.

The solvent may be selected from toluene, xylenes, benzene or mixtures thereof. Toluene is the most preferred solvent.

In one aspect the dissolved solids are transferred to a solvent recovery unit.

In a further aspect the solvent may be recovered by distillation, crystallization, thin-film evaporation, whiped-film evaporation and/or falling-film evaporation.

In a preferred embodiment the solvent is additionally heated by external heating.

More preferably, the external heating is provided by a heat exchanger.

The inventive method is preferably applied to the reactor immediately after the process regularly carried out in that reactor has been finished. Preferably, the inventive method may be utilized in an oligomerisation reactor for the oligomerisation of ethylene to obtain linear alpha-olefins. After having finished the oligomerisation reaction, hot solvent, preferably hot toluene, having a temperature of about 100 to 130°C, is introduced into the reactor and its equipment. In an alternative the solvent may be heated after introduction into the reactor. The hot toluene is then distributed throughout the reactor and its equipment to dissolve the solid deposits, especially high molecular weight oligomeric/polymeric deposits on the reactor walls. As the deposits are soluble in hot toluene, they may be discharged from the reactor easily by discharging the toluene. The solids dissolved in hot toluene may be then transferred to a solvent recovery unit, such as a distillation column, to separate the dissolved solid from the solvent. The solvent may then be recycled into the reactor for further cleaning thereof, or may be stored for further use.

Due to its unique solubility for high molecular weight oligomers/polymers, toluene is the most preferred solvent for use in oligomerisation and polymerisation reactors.

The features disclosed in the foregoing description or in the claims may, both separately and in any combination thereof, be material for realizing the invention in diverse forms thereof.

## Claims

1. Method for cleaning a reactor having a tendency of fouling by deposition of solids, wherein a hot solvent, in which the solids are soluble and which has a temperature of at least 75°C, is applied to the reactor, the solids being substantially dissolved and the dissolved solids being discharged from the reactor, wherein the method is carried out without opening the reactor to atmosphere, **characterized in that** the reactor is an oligomerisation reactor and the solvent is heated within the reactor by means of runaway of a reaction carried out therein.

2. Method according to claim 1, wherein the reactor is an oligomerisation reactor for the oligomerisation of ethylene to obtain linear alpha-olefins.

3. Method according to any of the preceding claims, wherein the solvent is an organic solvent, preferably a hydrocarbon solvent.

4. Method according to claim 3, wherein the solvent is selected from toluene, xylenes, benzene or mixtures thereof.

5. Method according to claim 4, wherein the solvent is toluene.

6. Method according to any of the precedings claims, wherein the dissolved solids are transferred to a solvent recovery unit.

7. Method according to claim 6, wherein the solvent is recovered by distillation, crystallization, thin-film evaporation, whiped-film evaporation and/or falling-film evaporation.

8. Method according to any of the preceding claims, wherein the solvent is additionally heated by external heating.

9. Method according to claim 8, wherein the external heating is provided by a heat exchanger.

## Patentansprüche

1. Verfahren zum Reinigen eines Reaktors mit einer Tendenz zur Verschmutzung durch Ablagerung von Feststoffen, wobei ein heißes Lösungsmittel, in welchem die Feststoffe löslich sind und welches eine Temperatur von wenigstens 75°C aufweist, auf den Reaktor appliziert wird, wobei die Feststoffe im wesentlichen gelöst und die gelösten Feststoffe aus dem Reaktor abgeführt werden, wobei das Verfahren ohne Öffnen des Reaktors zur Atmosphäre durchgeführt wird, **dadurch gekennzeichnet, dass** der Reaktor ein Oligomerisationsreaktor ist und das Lösungsmittel innerhalb des Reaktors mittels eines Durchgehens einer darin durchgeführten Reaktion erwärmt wird.

2. Verfahren nach Anspruch 1, wobei der Reaktor ein Oligomerisationsreaktor für die Oligomerisation von Ethylen, um lineare alpha-Olefine zu erhalten, ist.

3. Verfahren nach einem der vorangehenden Ansprüche, wobei das Lösungsmittel ein organisches Lösungsmittel, bevorzugt ein Kohlenwasserstofflösungsmittel ist.

4. Verfahren nach Anspruch 3, wobei das Lösungsmittel ausgewählt wird aus Toluol, Xylolen, Benzol oder Mischungen derselben.

5. Verfahren nach Anspruch 4, wobei das Lösungsmittel Toluol ist.

6. Verfahren nach einem der vorangehenden Ansprüche, wobei die gelösten Feststoffe zu einer Lösungsmittelwiedergewinnungseinheit überführt werden.

7. Verfahren nach Anspruch 6, wobei das Lösungsmittel durch Destillation, Kristallisation, Dünnfilmverdampfung, Schlagfilmverdampfung und/oder Fallfilmverdampfung wiedergewonnen wird.

8. Verfahren nach einem der vorangehenden Ansprüche, wobei das Lösungsmittel zusätzlich durch äußeres Erwärmen erhitzt wird.

9. Verfahren nach Anspruch 8, wobei das äußere Erwärmen durch einen Wärmetauscher bereitgestellt wird.

## Revendications

1. Procédé de nettoyage d'un réacteur ayant la tendance de s'encrasser par dépôt de matières solides, dans lequel un solvant chaud, dans lequel les matières solides sont solubles et qui a une température d'au moins 75 °C, est appliqué sur le réacteur, les matières solides étant sensiblement dissoutes et les matières solides dissoutes étant évacuées du réacteur, dans lequel le procédé est exécuté sans ouvrir le réacteur à l'atmosphère, **caractérisé en ce que** le réacteur est un réacteur d'oligomérisation et le solvant est chauffé à l'intérieur du réacteur par l'amplification d'une réaction se déroulant dans celui-ci.

2. Procédé selon la revendication 1, dans lequel le réacteur est un réacteur d'oligomérisation conçu pour l'oligomérisation d'éthylène afin d'obtenir des alpha-oléfines linéaires.

3. Procédé selon l'une quelconque des revendications précédentes, dans lequel le solvant est un solvant organique, de préférence un solvant hydrocarburé.

4. Procédé selon la revendication 3, dans lequel le solvant est choisi dans le groupe comprenant le toluène, les xylènes, le benzène ou des mélanges de ceux-ci.

5. Procédé selon la revendication 4, dans lequel le solvant est du toluène.

6. Procédé selon l'une quelconque des revendications précédentes, dans lequel les matières solides dissoutes sont transférées vers une unité de récupération de solvant.

7. Procédé selon la revendication 6, dans lequel le solvant est récupéré par distillation, cristallisation, évaporation dynamique en couche mince, évaporation en couche raclée, et/ou évaporation en couche descendante.

8. Procédé selon l'une quelconque des revendications précédentes, dans lequel le solvant est de plus chauffé par chauffage externe.

9. Procédé selon la revendication 8, dans lequel le chauffage externe est fourni par un échangeur de chaleur.
